# EUROPÄISCHE PATENTANMELDUNG

(11) **EP 4 776 488 A1**
(43) Veröffentlichungstag der Anmeldung: **15.07.2026**
(21) Anmeldenummer: 26151566.2
(22) Anmeldetag: 13.01.2026
(51) Int. Cl.: H02K 5/24

(54) **ELEKTROMOTORANORDNUNG MIT ELASTOMERER STATORENTKOPPLUNG**

(30) Priorität: 13.01.2025 DE 102025100971
(71) Anmelder: Vibracoustic SE, 69469 Weinheim (DE)
(72) Erfinder: Müller, Niklas, Ihringen (DE); Dürre, Markus, Ihringen (DE); Gutmann, Joschka, Staufen im Breisgau (DE); Müller, Leon, Bantzenheim (DE)
(74) Vertreter: Patentanwälte Olbricht Buchhold Keulertz

(57) **Zusammenfassung**

Vorgeschlagen wird eine Elektromotoranordnung (2) mit elastomerem Lagermittel (300) zur elastomeren Entkopplung eines Statorelements (200).

## Beschreibung

Die Erfindung betrifft eine Elektromotoranordnung gemäß Anspruch 1.

Elektromotoren umfassen ein Gehäuse, einen Stator und einen Rotor. Der Rotor kann als rotierendes Teil eine Quelle von Geräuschen, Vibrationen und Fahrschwingungen sein. Diese Schwingungen überträgt der Rotor an den Stator, welcher sie wiederum an das Gehäuse überträgt. Bekannte Statoren weisen jedoch in Bezug auf ihre Befestigung am Gehäuse unzureichende NVH-Eigenschaften (Noise, Vibration, Harshness) auf. Bislang wird diesem Problem mittels NVH-Covern begegnet, um die Geräuschen, Vibrationen und Fahrschwingungen einzukapseln. Derartige Cover sind allerdings bauraumintensiv.

Bislang ist keine zufriedenstellende Lösung bekannt, um die Übertragung von Schwingungen, insb. Torsionsschwingungen, vom Stator auf das Gehäuse wirksam zu vermeiden oder zu reduzieren.

Aufgabe der Erfindung ist daher die entsprechende Verbesserung des Stands der Technik.

Gelöst ist die Aufgabe mit den Merkmalen des Anspruchs 1. Ausgestaltungen sind Gegenstand der abhängigen Ansprüche und der übrigen Offenbarung.

Erfindungsgemäß ist eine Elektromotoranordnung vorgeschlagen, umfassend
- eine Zentrallängsachse, welche die Elektromotorrotoranordnung durchsetzt,
- ein Gehäuse,
- ein Statorelement, welches am Gehäuse vermittels einer Befestigung befestigt ist,
- wobei die Befestigung zumindest ein elastomeres Lagermittel zur elastomeren Entkopplung umfasst.

Das Statorelement ist mittels des zumindest einen elastomeren Lagermittels elastomer gelagert. Das Gehäuse und das Statorelement sind nun elastomer voneinander entkoppelt. Mit der Erfindung erfolgt eine Trennung des Transferpfads vom Statorelement in das Gehäuse mittels des elastomeres Lagermittels. Durch die Elastizität des Elastomers des Lagermittels in Verbindung mit der Materialdämpfung des Elastomers des Lagermittels können die bislang unerwünschten Schwingungen reduziert werden. Auch ist eine Verbesserung des NVH-Verhaltens erreicht. Auf bislang verwendete NVH-Cover kann verzichtet werden.

Das Gehäuse kann ein Motorgehäuse sein. Das Statorelement kann ein Stator oder ein Statorträger sein. Der Statorträger kann eine Hülse sein. Die Befestigung ist die einzige Befestigung zwischen Gehäuse und Statorelement. Die Elektromotoranordnung ist frei von einem metallischen Kontakt zwischen Gehäuse und Statorelement. Das Statorelement ist ausschließlich elastomer am Gehäuse gelagert. Das elastomere Lagermittel kann vorzugsweise in alle drei translatorischen Richtungen eine Entkopplungsfunktion aufweisen. Das elastomere Lagermittel kann vorzugsweise in alle drei rotatorischen Richtungen eine Entkopplungsfunktion aufweisen. Denkbar ist, dass das elastomere Lagermittel am Gehäuse befestigt ist und elastomer lagernd gegen das Statorelement anliegt. Denkbar ist, dass das elastomere Lagermittel am Statorelement befestigt ist und elastomer lagernd gegen das Gehäuse anliegt. Bei mehreren elastomeren Lagermitteln ist auch die Kombination daraus denkbar. Denkbar ist, dass das Gehäuse und/oder das Statorelement und/oder das zumindest eine elastomere Lagermittel durch axialen Zusammenbau zur Elektromotoranordnung verbunden sind. Die Zentrallängsachse erstreckt sich zentral durch das Statorelement. Das Statorelement kann von einer Quermittelebene durchsetzt sein. Die Quermittelebene kann eine Axialseite des Statorelements von der anderen Axialseite des Statorelements trennen.

Das elastomere Lagermittel kann ein Elastomerelement umfassen, vorzugsweise liegt das Elastomerelement in Umfangsrichtung und/oder in Axialrichtung und/oder in Radialrichtung an, vorzugsweise umfasst das elastomere Lagermittel ferner ein Trägerelement. Das Elastomerelement liegt am Gehäuse oder Statorelement an und ist am anderen von Gehäuse und Statorelement befestigt. Das Anliegen dient der Entkopplung in die jewilige Raumrichtung. Das Trägerelement trägt das Elastomerelement. Denkbar ist, dass das Trägerelement ein einziges Elastomerelement trägt. Dadurch kann das elastomere Lagermittel als in sich geschlossene Einheit vorgefertigt werden. Das Trägerelement kann ein separates Teil zum Gehäuse und Statorelement sein. Ist kein Trägerelement vorgesehen, kann das Elastomerelement direkt am Gehäuse oder Statorelement befestigt sein. Dabei ist ein zusätzliches Trägerelement verzichtbar. Das elastomere Lagermittel kann ein einziges Elastomerelement umfassen, wobei eine vorteilhafte Funktionsintegration in das eine Elastomerelement erfolgen kann. Das Elastomerelement des elastomeren Lagermittels kann einstückig sein. Dies erleichtert die Herstellung und verbessert das Dämpfungsverhalten.

Das Elastomerelement kann mit seinem Trägerelement und/oder dem Gehäuse und/oder dem Statorelement stoffschlüssig verbunden sein, wobei dies eine lebensdauerfeste Verbindung darstellt. Das kann beispielsweise mittels Vulkanisation erfolgen. Das Elastomerelement kann stoffschlussfrei mit seinem Trägerelement und/oder dem Gehäuse und/oder dem Statorelement verbunden und/oder verpresst sein. Die Verortung zwischen Gehäuse und Statorelement kann eine Stoffschlussverbindung verzichtbar machen und eine dauerhafte Positionierung des Elastomerelements gewährleisten.

Das elastomere Lagermittel kann zumindest ein elastomeres Axiallagermittel und/oder zumindest ein elastomeres Torsionslagermittel und/oder zumindest ein elastomeres Radiallagermittel umfassen, vorzugsweise sind das/die Axiallagermittel und/oder das/die Torsionslagermittel und/oder das/die Radiallagermittel von unterschiedlichen Abschnitten des (einen einzigen) Elastomerelements gebildet. Dies ist eine bevorzugte Funktionsintegration in das eine Elastomerelement.

Das elastomere Lagermittel kann eine Pressverbindung oder Stoffschlussverbindung oder Schraubverbindung zu seiner eigenen Befestigung ausbilden. Diese eigene Befestigung kann am Gehäuse oder am Statorelement erfolgen. Denkbar ist, dass die Verbindung vermittels des Elastomerelements und/oder vermittels des Trägerelements erfolgt. Die eigene Befestigung (Pressverbindung und Schraubverbindung und Stoffschlussverbindung mittels Haftvermittler) kann der Herstellung separat vom Gehäuse oder Statorelement dienen. Denkbar ist allerdings auch die Herstellung direkt am Gehäuse oder am Statorelement mittels Vulkanisation (beispiel einer Stoffschlussverbindung).

Die Elektromotoranordnung kann eine elastomere Ringdichtung umfassen, vorzugsweise ist die Ringdichtung in Umfangsrichtung durchgehend ausgebildet. Die Ringdichtung kann zwischen Gehäuse und Statorelement abdichten und/oder zwei axiale Bereich fluidisch voneinander trennen. Die Ringdichtung kann in Radialrichtung und/oder Axialrichtung druckbeaufschlagt sein, vorzugsweise ist sie zwischen und/oder von Gehäuse und/oder Statorelement und/oder Trägerelement gequetscht. Die Ringdichtung kann vom Elastomerelement gebildet sein. In diesem Fall ist sie integraler Bestandteil des Elastomerelements. Alternativ kann die Ringdichtung ein separates Teil zum Elastomerelement sein. Dies lässt dem elastomeren Lagermittel größere konstruktive Spielräume. Die Ringdichtung bietet eine wirksame Dichtung gegen zirkulierendes Öl, was der Haltbarkeit und dem sicheren Betrieb dient, insbesondere von Elektromotoren. Axial beidends kann das Statorelement jeweils eine Ringdichtung aufweisen.

Das elastomere Lagermittel kann angeordnet sein, um an einer Stirnseite des Statorelements elastomer zu entkoppeln und/oder in einem stirnseitigen Längenbereich des Statorelements angeordnet sein, um elastomer zu entkoppeln, vorzugsweise entspricht der Längenbereich höchstens 20 % der axialen Gesamtlänge des Statorelements, weiter vorzugsweise höchstens 10 %. Dadurch kann das elastomere Lagermittel so verortet sein, dass es eine zufriedenstellende Entkopplung ermöglichen kann. Die Verortung an oder nah an der Stirnseite ermöglicht eine hohe kardanische Steifigkeit und bewirkt auch der Krafteinleitung in einen stabilen Bereich des Gehäuses. Das elastomere Lagermittel kann an einem Gehäuseflansch elastomer anliegen oder dort selbst befestigt sein. Ein weiteres elastomeres Lagermittel kann genauso oder abweichend wie beschrieben an der anderen Stirnseite des Statorelements oder im anderen stirnseitigen Längenbereich des Statorelements elastomer entkoppeln.

Das Statorelement kann axial beidends mittels elastomerer Lagermittel gelagert sein. Denkbar ist, dass axial einends des Statorelements zumindest ein oder höchstens ein elastomeres Lagermittel und/oder zumindest eine oder höchstens eine Pinanordnung verortet ist und axial anderenends des Statorelements zumindest ein oder höchstens ein elastomeres Lagermittel und/oder zumindest eine oder höchstens eine Pinanordnung verortet ist. Die axial beidends angeordneten Lagermittel können identisch oder abweichend sein. Denkbar ist, dass einends des Statorelements ein Entkopplungsring und/oder zumindest ein Entkopplungspin oder eine Pinanordnung vorgesehen ist und axial anderenends des Statorelements ein Entkopplungsring und/oder zumindest ein Entkopplungspin oder eine Pinanordnung vorgesehen ist. Denkbar ist, dass das/die Lagermittel axial einends und axial anderenends in Radialrichtung entkoppeln. Denkbar ist, dass nur das/die Lagermittel auf einer der beiden Axialseiten des Statorelements in Torsionalrichtung und Axialrichtung entkoppeln. Dadurch kann/können das/die Lagermittel auf der anderen Axialseite kleiner bauen.

Die obenstehende allgemeine Offenbarung kann konstruktiv konkreter ausgestaltet werden. Zur elastomeren Entkopplung kann gemäß einer ersten Alternative ein Entkopplungsring vorgesehen sein und gemäß einer zweiter Alternative ein Entkopplungspin vorgesehen sein, wobei mehrere Entkopplungspins eine Pinanordnung bilden können. Wie nachstehend zu jeder der beiden Alternativen im Detail beschrieben, erzielen die besonderen technischen Merkmale jeder Alternative dieselbe technische Wirkung und lösen dieselbe technische Aufgabe.

Das elastomere Lagermittel kann ein Entkopplungsring sein, vorzugsweise umfassend einen Trägerring und einen Elastomerring, weiter bevorzugt nur diese Teile umfassend. Der Trägerring kann das Trägerelement sein. Der Elastomerring kann das Elastomerelement sein. Der Entkopplungsring und/oder der Trägerring und/oder der Elastomerring kann/können in Umfangsrichtung durchgehend sein. Dadurch ist eine gleichmäßige Entkopplung ermöglicht. Der Trägerring kann ein separates Teil zum Gehäuse und Statorelement sein. Das kann der Herstellung separat vom Gehäuse oder Statorelement dienen.

Denkbar ist, dass der Entkopplungsring nur aus dem Elastomerring gebildet ist. Der Entkopplungsring kann dann trägerringfrei gebildet sein. Dadurch ist die Bauteilanzahl und der Bauraumbedarf reduziert.

Denkbar ist beim Entkopplungsring, dass der Trägerring längsschnittlich ein L-Profil oder ein Z-Profil aufweist, vorzugsweise schließen die Schenkel des Profils rechte Winkel ein. Dadurch kann der Trägerring über seine Schenkel der Abstützung am Gehäuse bzw. Statorelement und/oder dem Hinterbauen des Elastomerrings dienen, um abzustützen. Der Elastomerring kann an zumindest einem Schenkel angeordnet sein.

Der Entkopplungsring kann eine elastomere Verzahnung mit Zähnen ausbilden, welche formschlüssig in eine entsprechend Gegenkontur greift, vorzugsweise sind die Zähne in Radialrichtung gesehen trapezförmig und/oder die Gegenkontur in Radialrichtung gesehen trapezförmig. Dieser Formschluss verhindert ein Durchrutschen. Die Gegenkontur kann vom Gehäuse oder Statorelement ausgebildet sein. Die Gegenkontur kann durch stirnseitliche Ausnehmungen gebildet sein. Dies ermöglicht eine radialkompakte Bauweise und erleichtert einen axialen Zusammenbau. Die Gegenkontur kann zumindest eine Axialfläche und/oder eine Radialfläche umfassen. Die Gegenkontur kann als Ringgegenkontur bezeichnet sein. Die Verzahnung kann in Zusammenbaurichtung erfolgen. Die Verzahnung ist eine vorteilhafte Möglichkeit, um eine Entkopplung in diverse Raumrichtungen zu erreichen. Denkbar ist, dass die Verzahnung/die Zähne in Umfangsrichtung und/oder in Axialrichtung und/oder in Radialrichtung anliegt und in die entsprechende Richtung(en) entkoppelt. Vorzugsweise in ausschließlich eine Richtung davon, weiter bevorzugt ausschließlich in Umfangsrichtung. Jeder Zahn kann einen Zahnkopf mit einer Kopffläche und/oder zwei Zahnflanken haben. Liegt die Verzahnung/die Zähne (ausschließlich) in Umfangsrichtung an, beispielsweise mittels elastomerer Kontaktradialflächen, kann/können sie an (einer) Kontaktradialgegenfläche(n) anliegen, beispielsweise vom Gehäuse oder Statorelement gebildet.

Denkbar ist beim Entkopplungsring, dass die Zähne jeweils eine freie Kopffläche am/an einem Zahnkopf haben. Die Kopffläche kann eine Lücke begrenzen. Die Kopffläche kann axial freiraumbeabstandet zur Gegenkontur sein. Die freie Kopffläche zwischen Verzahnung und Gegenkontur dient dem Erreichen einer hohen Kardaniksteifigkeit.

Denkbar ist beim Entkopplungsring, dass sich die Trapezform der Zähne und/oder Gegenkontur in Richtung einer Quermittelebene verjüngt. Das verhindert eine materialschädigende Zugspannung bei Axialbelastung. Die Zahnflanken können an der Gegenkontur anliegen.

Denkbar ist beim Entkopplungsring, dass die Zähne jeweils in Radialrichtung in das Innere des Statorelements einstehen, vorzugsweise um eine Einstandsstrecke zwischen 1 mm bis 10 mm. Dies dient einer sicheren Anlage und verhindert ein Abrutschen.

Denkbar ist beim Entkopplungsring, dass die Zähne jeweils einen Zahnkern umfassen, der vom Gehäuse oder dem Statorelement oder dem Trägerring gebildet ist. Dadurch ist der zahn stabil ausgebildet und kann Kräfte bestmöglich aufnehmen und übertragen. Ferne ist die Lebensdauer des Zahns verlängert. Der Zahnkern kann dadurch gebildet sein, dass sich das Gehäuse oder das Statorelement oder der Trägerring mit einer Ausformung in den Elastomerring hinein erstreckt.

Denkbar ist beim Entkopplungsring, dass das Axiallagermittel gebildet ist von einer elastomeren Kontaktstirnfläche des Elastomerrings. Die Kontaktstirnfläche kann am Gehäuse oder Statorelement oder dessen Statorträgerstirnfläche anliegen. Die Kontaktstirnfläche dient der Axialsteifigkeit. Die Kontaktstirnfläche kann zur Kopffläche verschieden oder damit identisch sein. Die Trennung dient der gezielteren konstruktiven Anpassung der jeweiligen Fläche, die Integration dient der Funktionszusammenfassung und Bauraumeinsparung.

Denkbar ist beim Entkopplungsring, dass die elastomere Kontaktstirnfläche Kontaktstirnflächenausnehmungen ausbildet. Die Kontaktstirnflächenausnehmungen können bogenförmig sein. Sie dienen der Einstellung der Progression und axialen Kennlinie. Die Kontaktstirnflächenausnehmungen sind axial freiraumbeabstandet zur Anlagefläche von Gehäuse oder Statorelement.

Denkbar ist beim Entkopplungsring, dass das Torsionslagermittel gebildet ist von elastomeren Kontaktradialflächen des Elastomerrings. Die Kontaktradialflächen können in Umfangsrichtung am Gehäuse oder Statorelement anliegen. Die Kontaktradialflächen können von den Zahnflanken gebildet sein. Die Kontaktradialflächen dienen der Torsionssteifigkeit. Die Kontaktradialflächen können zu den Zahnflanken verschieden oder damit identisch sein. Die Trennung dient der gezielteren konstruktiven Anpassung der jeweiligen Fläche, die Integration dient der Funktionszusammenfassung und Bauraumeinsparung.

Denkbar ist beim Entkopplungsring, dass das Radiallagermittel gebildet ist von einer elastomeren Kontaktumfangsfläche des Elastomerrings. Die Kontaktumfangsfläche kann am Gehäuse oder Statorelement anliegen. Die Kontaktumfangsfläche kann eine Außen- oder Innenumfangsfläche sein. Die Kontaktumfangsfläche dient der Radialsteifigkeit.

Denkbar ist beim Entkopplungsring, dass der Elastomerring in Umfangsrichtung Anlagepolster und/oder Durchgangsabschnitte ausformt. Diese Ausgestaltung dient der Einstellung von Steifigkeiten in Axial- und/oder Radialrichtung. Die Anlagepolster können in Umfangsrichtung benachbart zueinander angeordnet sein. Die Durchgangsabschnitte können benachbart zueinander angeordnet sein. Die Anlagepolster und Durchgangsabschnitte können in Umfangsrichtung abwechselnd angeordnet sein.

Die Anlagepolster können die Axiallagermittel und/oder die Torsionslagermittel und/oder die Radiallagermittel ausbilden. Die Anlagepolster können am Gehäuse oder Statorelement anliegen. Beispielsweise können die Axiallagermittel an einer Stirnseite von Gehäuse oder Statorelement anliegen. Beispielsweise können die Radiallagermittel an einer Umfangsfläche von Gehäuse oder Statorelement anliegen. Die Axiallagermittel dienen der Axialsteifigkeit. Die Radiallagermittel dienen der Radialsteifigkeit. Jedes Anlagepolster kann aus einem Axiallagermittel und einem Radiallagermittel gebildet sein. Diese Ausgestaltung dient der Einstellung von Steifigkeiten in Axial- und/oder Radialrichtung.

Die Durchgangsabschnitte können zum Gehäuse und/oder Statorelement einen Freiraumabstand ausbilden, vorzugsweise mit der Umfangsfläche und/oder Stirnfläche von Gehäuse und/oder Statorelement. Die Durchgangsabschnitte können Axialdurchgänge und/oder Radialdurchgänge sein. Jeder Durchgangsabschnitt kann aus einem Axialdurchgang und einem Radialdurchgang gebildet sein. Diese Ausgestaltung dient der Einstellung von Steifigkeiten in Axial- und/oder Radialrichtung. Die Durchgangsabschnitte können begrenzt sein vom Elastomerkörper und/oder Trägerelement und/oder Gehäuse und/oder Statorelement. Dadurch lässt sich eine konstruktive Anpassung vornehmen.

Denkbar ist beim Entkopplungsring, dass die Ringdichtung vom Elastomerring gebildet ist. Die Einstückigkeit reduziert eine Bauteilanzahl und führt zu einer kompakten Bauweise. Die Ringdichtung kann sich in Richtung Quermittelebene erstrecken. Dies dient einer axial kompakten Bauweise. Die Ringdichtung kann in Radialrichtung von einer Hülse gequetscht sein. Dies dient einer hohen Dichtigkeit.

Denkbar ist, dass der Entkopplungsring auf einer Außenumfangseite des Statorelements befestigt ist. Die Befestigung kann eine Pressverbindung sein, vorzugsweise vermittels des Trägerrings. Der Elastomerring kann elastisch am Gehäuse anliegen.

Denkbar ist, dass der Entkopplungsring am Gehäuse befestigt ist. Die Befestigung kann eine Pressverbindung sein, vorzugsweise vermittels des Trägerrings. Der Elastomerring kann elastisch am Statorelement anliegen, vorzugsweise an der Außenumfangsfläche des Statorelements und/oder an der Statorträgerstirnfläche und/oder an Statorträgerradialflächen. Die Statorträgerradialflächen können von der Gegenkontur gebildet sein.

Das elastomere Lagermittel kann ein Entkopplungspin sein, vorzugsweise umfassend einen Trägerpin und eine Elastomerkappe, weiter bevorzugt nur diese Teile umfassend. Der Trägerpin kann das Trägerelement sein. Die Elastomerkappe kann das Elastomerelement sein. Dadurch ist eine punktuelle Entkopplung ermöglicht. Der Trägerpin kann ein separates Teil zum Gehäuse und Statorelement sein. Das kann der Herstellung separat vom Gehäuse oder Statorelement dienen. Der Entkopplungspin kann trotz konstruktiv-geometrischer Vorgaben von Gehäuse und/oder Statorelement einfach angeordnet werden - er ist in seiner Positionierung variabel. Die Elektromotoranordnung kann mehrere Entkopplungspins umfassen. Der Entkopplungspin weist eine Pinlängsachse auf. Sie erstreckt sich in Längsrichtung durch den Entkopplungspin hindurch. Die Pinlängsachse kann parallel zur Zentrallängsachse sein.

Denkbar ist beim Entkopplungspin, dass der Trägerpin die Elastomerkappe trägt. Die Elastomerkappe kann am Trägerpin stoffschlüssig befestigt sein (anvulkanisiert oder mittels Haftvermittler) oder darauf aufgepresst sein. Der Trägerpin kann die Elastomerkappe hinterbauen und so eine sichere Anlage ausbilden. Der Trägerpin kann einstückig sein. Das vereinfacht die Herstellung und dient der Haltbarkeit.

Denkbar ist beim Entkopplungspin, dass der Trägerpin einen Befestigungsbereich und einen Trägerbereich ausbildet. Der Befestigungsbereich befestigt den Trägerpin am Gehäuse oder am Statorelement. Der Befestigungsbereich kann ein Gewinde ausbilden. Dadurch kann der Trägerpin in einfacher Weise reversibel in ein Gegengewinde im Gehäuse oder Statorelement eingeschraubt werden. Der Befestigungsbereich kann eine Presspassungsfläche ausbilden. Dadurch kann der Trägerpin in einfacher Weise in das Gehäuse oder Statorelement eingepresst werden. Der Trägerbereich trägt die Elastomerkappe.

Denkbar ist beim Entkopplungspin, dass der Trägerbereich einen Befestigungsanschlag ausbildet. Der Befestigungsanschlag kann eine Montagestellung definieren und/oder dem Trägerbereich zugewandt sein. Der Der Befestigungsanschlag kann am Gehäuse oder am Statorelement anliegen. Denkbar ist, dass der Trägerbereich einen größeren Durchmesser aufweist als der Befestigungsbereich. Dadurch kann auch die Elastomerkappe größer bauen und/oder der Befestigungsanschlag erzeugt sein.

Denkbar ist beim Entkopplungspin, dass die Elastomerkappe einen Zylinderabschnitt und/oder einen Stirnseitenabschnitt ausbildet und in eine entsprechend Gegenkontur greift, vorzugsweise zumindest abschnittsweise formschlüssig. Eine solche Elastomerkappe kann in vorteilhafter Weise umfangsseitig und/oder axial isolieren. Der Entkopplungspin kann in Axialrichtung in die Gegenkontur eingreifen. Dies vereinfacht einen Zusammenbau. Die Gegenkontur kann als Pingegenkontur bezeichnet sein.

Denkbar ist beim Entkopplungspin, dass der Zylinderabschnitt ein Hohlzylinderabschnitt sein kann und/oder vom Trägerbereich hinterbaut sein kann. Der Zylinderabschnitt kann in Umfangsrichtung (bezogen auf die Pinlängsachse) durchgehend sein. Der Entkopplungspin weist somit eine umfangsseitig durchgehende Gummierung auf. Die Elastomerkappe kann umfangsseitig an der Gegenkontur teilweise oder vollständig anliegen. Die Elastomerkappe kann stirnseitig an der Gegenkontur teilweise oder vollständig anliegen. Dadurch kann der eine Entkopplungspin in Axial-, Radial- und Umfangsrichtung entkoppeln.

Denkbar ist beim Entkopplungspin, dass der Stirnseitenabschnitt scheibenförmig ist und/oder vom Trägerbereich hinterbaut ist. Die Elastomerkappe kann axial an der Gegenkontur teilweise oder vollständig anliegen.

Denkbar ist beim Entkopplungspin, dass die Elastomerkappe eine Außenumfangsseitenkonturierung und/oder eine Stirnseitenkonturierung ausbildet. Dadurch kann eine Steifigkeit in die entsprechende Raumrichtung eingestellt werden.

Denkbar ist, dass der Entkopplungspin und/oder der Trägerpin und/oder der Trägerbereich und/oder der Befestigungsbereich und/oder die Elastomerkappe bezüglich der eigenen Pinlängsachse rotationssymmetrisch ist/sind oder ein Rotationskörper ist/sind. Die Ausgestaltung als Rotationskörper vereinfach die Herstellung und den Zusammenbau, da dies orientierungsfrei geschehen kann.

Denkbar ist beim Entkopplungspin, dass die Elastomerkappe eine Rotationssymmetrie (bezogen auf die Pinlängsachse) mit der Zähligkeit von 2 (n=2) aufweist. Die Elastomerkappe kann zwei Bereiche erster Materialstärke aufweisen, die sich bezüglich der Pinlängsachse diametral gegenüberliegen können, und zwei weitere Bereiche zweiter Materialstärke aufweisen, die sich bezüglich der Pinlängsachse diametral gegenüberliegen können, wobei die erste Materialstärke größer als die zweite Materialstärke sein kann. Dadurch kann das Elastomerpolster des Entkopplungspins in einer Raumrichtung, beispielsweise in Radialrichtung (bezogen auf die Zentrallangsachse), dicker sein als in einer anderen Raumrichtung, beispielsweise in Umfangsrichtung (bezogen auf die Zentrallangsachse). Dadurch kann eine Steifigkeit in die entsprechende Raumrichtung eingestellt werden.

Denkbar ist beim Entkopplungspin, dass die Elastomerkappe querschnittlich oval ist, und/oder die Elastomerkappe in zumindest einem ersten Winkelfenster, das vorzugsweise in Umfangsrichtung oder Radialrichtung liegt, eine gleichbleibende Materialstärke hat, und/oder die Elastomerkappe eine Materialstärke in Radialrichtung hat, die größer als eine/die Materialstärke in Umfangsrichtung ist, oder umgekehrt. Dadurch kann eine Steifigkeit in die entsprechende Raumrichtung eingestellt werden. Denkbar ist, dass die Elastomerkappe querschnittlich oval ist, und/oder die Elastomerkappe in zwei ersten Winkelfenstern, die vorzugsweise in Umfangsrichtung oder Radialrichtung liegen, eine gleichbleibende Materialstärke hat, und/oder die Elastomerkappe eine Materialstärke in Radialrichtung hat, die größer als eine/die Materialstärke in Umfangsrichtung ist, oder umgekehrt. Dadurch kann eine Steifigkeit in die entsprechende Raumrichtungen eingestellt werden.

Denkbar ist beim Entkopplungspin, dass die Außenumfangsfläche des Trägerpins, vorzugsweise des Trägerbereichs, auf einem gedachten ersten Kreis liegt und die Außenumfangsfläche der Elastomerkappe auf einem gedachten zweiten Kreis liegt, vorzugsweise zumindest abschnittsweise, beispielweise vollständig innerhalb des/eines ersten Winkelfensters, wobei die beiden gedachten Kreise konzentrische Kreise sind. Dadurch kann eine gleichbleibende Materialstärke in diesem Bereich erzeugt werden. Mittels der konzentrischen Kreise kann ein linearer Druck auf die Elastomerkappe in einen Flächendruck umgewandelt werden, was die Lebensdauer der Elastomerkappe steigert.

Das erste/die ersten Winkelfenster kann/können in Umfangsrichtung liegen. Das/die erste(n) Winkelfenster kann/können eine Breite zwischen 5° und 45° haben. Zwei erste Winkelfenster können sich diametral bezüglich der Pinlängsachse gegenüberliegen. Das/die Winkelfenster kann/können die entsprechende Pinlängsachse als Zentrum aufweisen.

Denkbar ist beim Entkopplungspin, dass die Gegenkontur bezüglich der entsprechenden Pinlängsachse rotationssymmetrisch ist oder ein Rotationskörper ist. Der Rotationskörper dient einer gleichförmigen Steifigkeit in die entsprechenden Raumrichtungen. Die Rotationssymmetrie kann so eingestellt werden, dass sich in unterschiedliche Raumrichtungen unterschiedliche Steifigkeiten ergeben, beispielsweise durch unterschiedliche Abstände zum Elastomerelement. Denkbar ist, dass die Gegenkontur querschnittlich oval ist. Dadurch kann eine Steifigkeit in die entsprechende Raumrichtung eingestellt werden. Die lange Quererstreckung der ovale Gegenkontur kann sich in Radialrichtung oder Umfangsrichtung erstrecken (jeweils bezogen auf die Zentrallängsachse). Die kurze Quererstreckung der ovale Gegenkontur kann sich in die andere Richtung von Radialrichtung und Umfangsrichtung erstrecken (jeweils bezogen auf die Zentrallängsachse). Dadurch kann die Torsionskennlinie weicher oder härter eingestellt werden und auf die Progression Einfluss genommen werden. Die Rotationssymmetrie (bezogen auf die Pinlängsachse) kann eine Zähligkeit von 2 (n=2) aufweisen.

Denkbar ist beim Entkopplungspin, dass die Gegenkontur mit der Elastomerkappe zumindest einen Ausweichraum begrenzt. In den Ausweichraum kann Elastomer der Elastomerkappe bei Lasteinwirkung verdrängt werden. Dadurch kann die Torsionskennlinie weicher oder härter eingestellt werden und auf die Progression Einfluss genommen werden. Denkbar sind zwei Ausweichräume, die sich diametral bezüglich der Pinlängsachse gegenüberliegen. Denkbar sind zwei Ausweichräume, die sich entlang der Radialrichtung diametral bezüglich der Pinlängsachse gegenüberliegen. Dadurch sind Ausweichräume in Zentrifugalrichtung geschaffen.

Denkbar ist beim Entkopplungspin, dass die Elastomerkappe in Umfangsrichtung anliegt und in Radialrichtung zumindest einen/den Ausweichraum begrenzt oder andersherum. Die Elastomerkappe kann an der Gegenkontur anliegen, zumindest abschnittsweise, bevorzugt zumindest an zwei diametral bezüglich der Pinlängsachse verorteten Bereichen. Umfangsrichtung und Radialrichtung können sich auf die Zentrallängsachse beziehen. Die Elastomerkappe kann bereichsweise an der Gegenkontur anliegen und bereichsweise freiraumbeabstandet dazu sein. Der Ausweichraum kann begrenzt sein von der Elastomerkappe und der Gegenkontur. Dadurch kann die Torsionskennlinie weicher oder härter eingestellt werden und auf die Progression Einfluss genommen werden.

Denkbar ist, dass mehrere Entkopplungspins an zumindest einer Stirnfläche des Statorelements und/oder an einer Umfangsfläche des Statorelements und/oder am Gehäuse befestigt sind. Die Entkopplungspins zu einer Axialseite des Statorelements können eine Pinanordnung bilden. Die Entkopplungsfunktion kann vorteilhafterweise auf mehrere Entkopplungspins verteilt werden.

Denkbar ist, dass zu den beiden Axialseiten des Statorelements unterschiedlich viele Entkopplungspins angeordnet sind. Die ungleiche Anzahl führt zur Splittung zwischen einer Axialseite, die hauptsächlich der hohen Drehmomentübertragung dient, und einer Axialseite, die hauptsächlich eine Lagerfunktion hat.

Denkbar ist, dass die Entkopplungspins in ihrer Pinanordnung auf einem imaginären Kreis liegen oder in Umfangsrichtung ungleichmäßige Radialabstände zur Zentrallängsachse aufweisen und/oder in Umfangsrichtung gleichmäßig oder ungleichmäßig beabstandet sind. Die Positionierung der Entkopplungspins auf dem Kreis dient der gleichförmigen Entkopplung und die ungleichmäßige Positionierung ist vorteilhaft, um Bauraumanforderungen zu erfüllen.

Hierin beschriebene Richtungen (Axialrichtung, Längsrichtung, Radialrichtung, Umfangsrichtung, translatorische/rotatorische Richtungen usw.) sind, sofern nicht abweichend angegeben, grundsätzlich auf das Statorelement oder die Zentrallängsachse bezogen. Ein hierin beschriebenen Anliegen kann ein loses Anliegen sein, sofern nicht abweichend angegeben.

Die Beschreibung eines (einzigen) elastomeren Lagerelements kann auf weitere elastomere Lagerelemente übertragen werden. Aus Gründen der besseren Lesbarkeit ist regelmäßig ein/das elastomere Lagerelement beschrieben, wobei die Offenbarung auch zumindest ein/das elastomere Lagerelement umfasst, sofern nicht auf ein einziges Lagerelement begrenzt.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 eine Prinzipskizze einer Elektromotoranordnung,
Fig. 2 einen Längsschnitt durch eine Elektromotoranordnung mit Entkopplungsring,
Fig. 3 eine Perspektivansicht einer Elektromotoranordnung mit Entkopplungsring,
Fig. 4 eine Detailansicht einer Elektromotoranordnung mit Entkopplungsring,
Fig. 5 eine weitere Detailansicht einer Elektromotoranordnung mit Entkopplungsring,
Fig. 6 eine weitere Detailansicht einer Elektromotoranordnung mit Entkopplungsring,
Fig. 7 eine Perspektivansicht einer Elektromotoranordnung mit Entkopplungspins,
Fig. 8 eine Detailansicht einer Elektromotoranordnung mit Entkopplungspins und
Fig. 9 eine Detailansicht einer Elektromotoranordnung mit Entkopplungspins.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

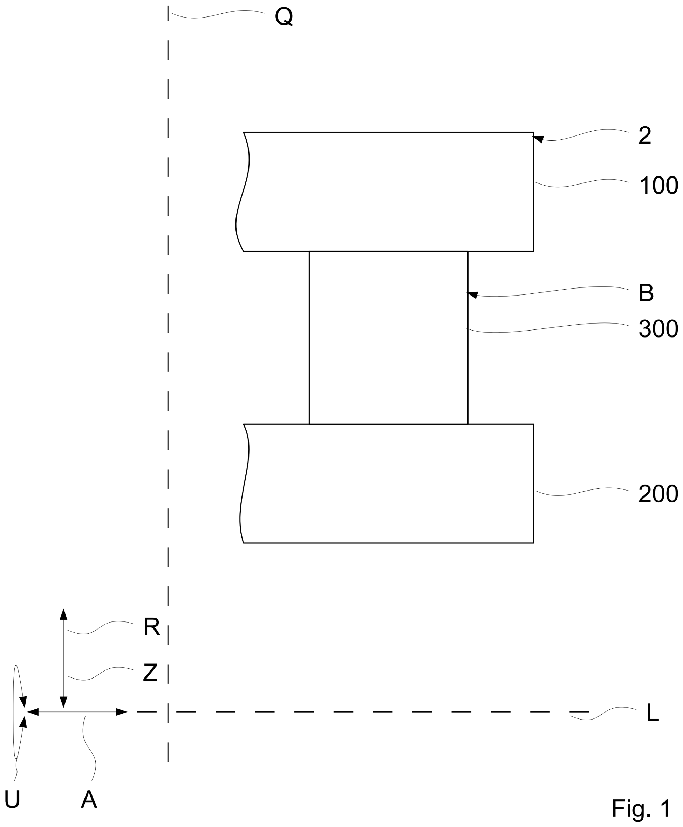

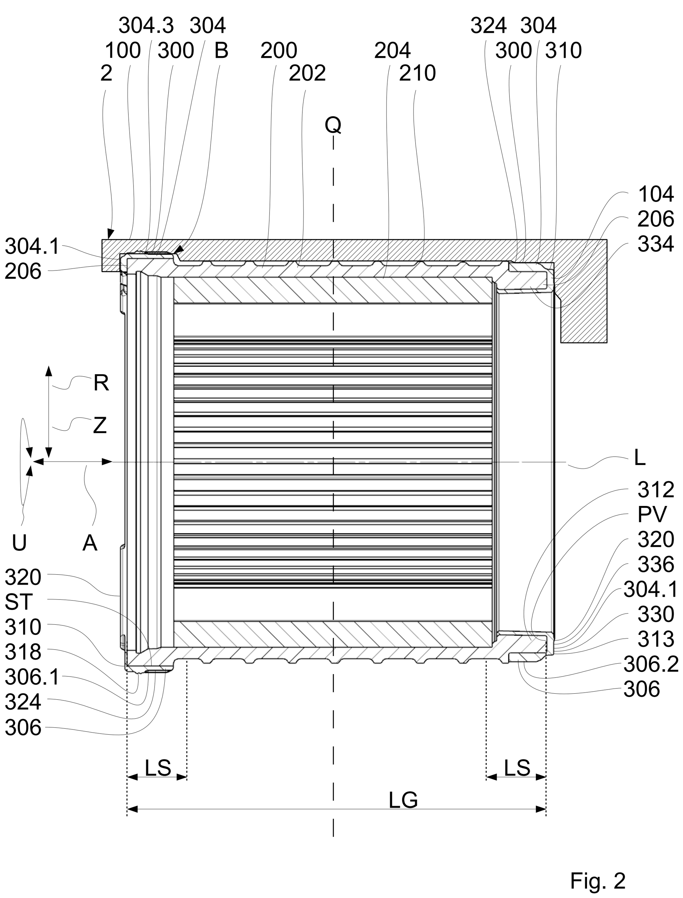

In **Figur 1** ist eine Befestigung B und eine prinzipielle elastomere Entkopplung eines Statorelements 200 von einem Gehäuse 100 einer Elektromotoranordnung 2 vermittels eines elastomeren Lagermittels 300 gezeigt. Die Befestigung B ist die einzige Befestigung zwischen Gehäuse 100 und Statorelement 200. Senkrecht zu einer Zentrallängsachse L erstreckt sich eine Radialrichtung R, die gleichsam auch einer Zentrifugalrichtung Z entspricht. Entlang der Zentrallängsachse L liegt eine Axialrichtung A an. Um die Längsachse A herum erstreckt sich eine Umfangsrichtung U und eine Quermittelebene Q ist derart angeordnet, dass deren Normalenvektor auf der Zentrallängsachse L liegt. Diese Richtungsangaben sind allesamt allgemein auf die Elektromotoranordnung 2 bezogen. Auf davon abweichende Richtungsangaben, insb. im Umfang der Beschreibung des Entkopplungspins 350, ist separat hingewiesen. Die nachfolgenden Figuren 2 bis 9 bauen auf Figur 1 auf, weshalb bereits beschriebene Merkmale nachstehend nicht abermals beschrieben werden. Ferner wird in der Figurenbeschreibung der Figuren 2 bis 9 zur Vermeidung von Wiederholungen auf das erneute Beschreiben bereits benannter Merkmale verzichtet. Elemente des Gehäuses 100 weisen ein Bezugszeichen aus dem 100er-Bereich auf. Elemente des Statorelements 200 weisen ein Bezugszeichen aus dem 200er-Bereich auf. Elemente des Lagermittels 300 weisen ein Bezugszeichen aus dem 300er-Bereich auf, wobei sich die Bezugszeichen 306 bis 344 konkret mit dem Entkopplungsring 306 befassen und die Bezugszeichen 350 bis 366 auf den Entkopplungspin 350 abstellen.

Die elastomere Entkopplung bedient sich zumindest eines elastomeren Lagermittels 300. Das Statorelement 200 ist axial beidends mittels elastomerer Lagermittel 300 gelagert. Die elastomeren Lagermittel 300 sind allesamt jeweils so angeordnet, um an einer Stirnseite des Statorelements 200 elastomer zu entkoppeln und/oder so angeordnet, dass sie jeweils in einem stirnseitigen Längenbereich LS des Statorelements 200 verortet sind, der beispielsweise höchstens 20 % der axialen Gesamtlänge LG des Statorelements 200 entspricht.

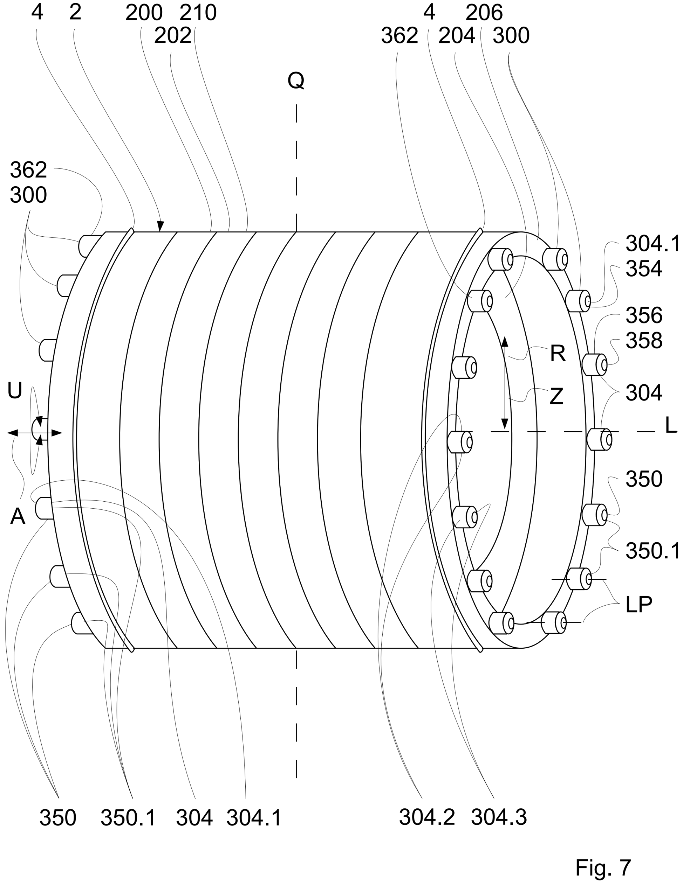

Die **Figuren 2 bis 6** zeigen ein elastisches Lagermittel 300 als Entkopplungsring 306 in diversen beispielhaften Ausgestaltungen, deren Bezugszeichen auf 306.1, 306.2, 306.3. 306.4 und 306.5 lauten. Die dort gezeigte Befestigung B kann beispielsweise zwei unterschiedlich und offenbarungsgemäß ausgestaltete Entkopplungsringe 306 umfassen. Die dort gezeigte Befestigung B kann neben dem mindestens einen Entkopplungsring 306 auch mindestens einen Entkopplungspin 350 umfassen, der in den Figuren 7 bis 9 in diversen beispielhaften Ausgestaltungen gezeigt und allgemeiner in der Erfindungsbeschreibung beschrieben ist.

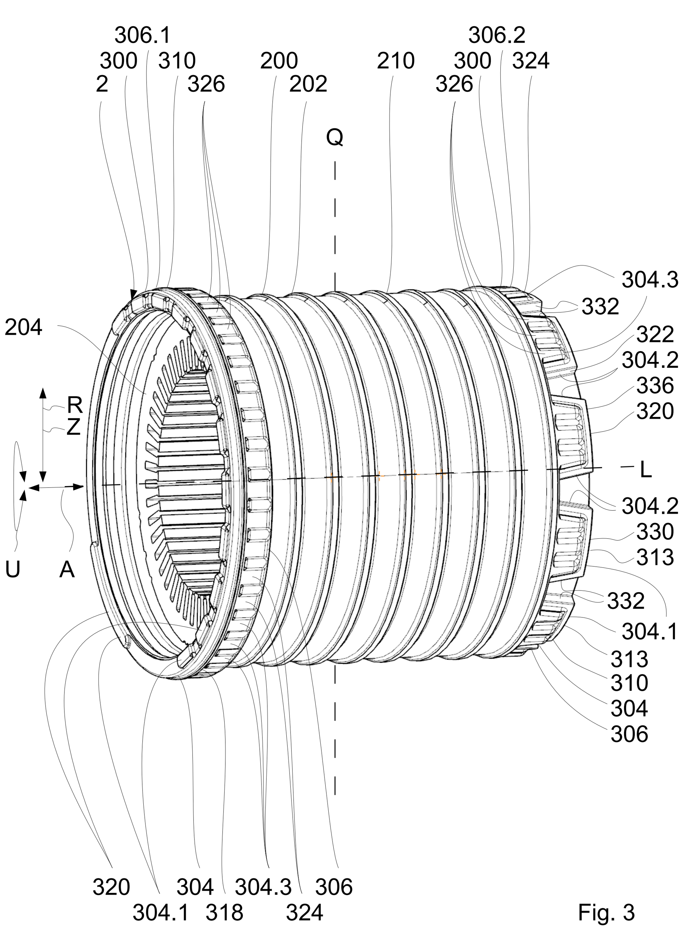

**Figur 2** zeigt in einem Längsschnitt eine Elektromotorrotoranordnung 2, die in **Figur 3** perspektivisch dargestellt ist. In Figur 3 ist das Gehäuse 100 ausgeblendet. Beide Figuren 2 und 3 werden gemeinsam beschrieben. Die Elektromotorrotoranordnung 2 umfasst eine Zentrallängsachse L, welche die Elektromotorrotoranordnung 2 durchsetzt. Das Gehäuse 100 ist als Motorgehäuse abgebildet. Das Statorelement 200 ist als hülsenartiger Statorträger 202 abgebildet, der einen innenumfangsseitig angeordneten Stator 204 trägt. Das Statorelement 200 hat axial beidends jeweils eine Statorträgerstirnfläche 206 und weist eine Statorträgerumfangsfläche 210 auf, die eine Außenumfangsfläche ist. In manchen Ausführungen umfasst das Statorelement 200 eine Kontaktradialgegenfläche 208. Via einer Befestigung B ist das Statorelement 200 am Gehäuse 100 vollständig elastomer gelagert. Vorliegend umfasst die Befestigung B zwei elastomere Lagermittel 300, jeweils als Entkopplungsring 306 in der Ausgestaltung als Entkopplungsring 306.1, 306.2.

Nachstehend wird das elastomere Lagermittel 300 als Entkopplungsring 306.1 beschrieben. Er umfasst ein einstückiges Elastomerelement 304. Er liegt in Radialrichtung R und in Axialrichtung A und in Radialrichtung R am Gehäuse 100 an. Das elastomere Lagermittel 300 ist trägerelementfrei. Da kein Trägerelement des Lagermittels 300 vorgesehen ist, ist das Elastomerelement 304 direkt am Statorelement 200 befestig. Das elastomere Lagermittel 300 umfasst zumindest ein elastomeres Axiallagermittel 304.1 und zumindest ein elastomeres Radiallagermittel 304.3. Das elastomere Lagermittel 300 als Entkopplungsring 306.1 bildet eine Stoffschlussverbindung ST zu seiner eigenen Befestigung am Statorelement 200 aus. Das Elastomerelement 304 ist ein Elastomerring 310. Der Entkopplungsring 306.1 und der Elastomerring 310 sind in Umfangsrichtung U durchgehend. Der Entkopplungsring 306.1 ist nur aus dem Elastomerring 310 gebildet.

Beim Entkopplungsring 306.1 ist das Axiallagermittel 304.1 gebildet von einer elastomeren Kontaktstirnfläche 320 des Elastomerrings 310. Die Kontaktstirnfläche 320 liegt am Gehäuse 100 an. Beim Entkopplungsring 306.1 ist das Radiallagermittel 304.3 gebildet ist von einer elastomeren Kontaktumfangsfläche 324 des Elastomerrings 310. Die Kontaktstirnfläche 320 liegt am Gehäuse 100 an. Beim Entkopplungsring 306.1 formt der Elastomerring 310 in Umfangsrichtung U benachbarte Anlagepolster 326 aus. Die Anlagepolster 326 entsprechen den Radiallagermitteln 304.3. Die Elektromotoranordnung 2 umfasst eine elastomere Ringdichtung 318, welche in Umfangsrichtung U durchgehend ausgebildet ist. Die Ringdichtung 318 dichtet zwischen Gehäuse 100 und Statorelement 200 ab. Die Ringdichtung 318 ist in Radialrichtung R druckbeaufschlagt und vom Elastomerelement 304 gebildet.

Nachstehend wird das elastomere Lagermittel 300 als Entkopplungsring 306.2 beschrieben. Er umfasst ein einstückiges Elastomerelement 304. Das Elastomerelement 304 liegt in Umfangsrichtung U und in Axialrichtung A und in Radialrichtung R am Gehäuse 100 an. Das elastomere Lagermittel 300 ist ebenfalls trägerelementfrei. Da kein Trägerelement des Lagermittels 300 vorgesehen ist, ist das Elastomerelement 304 direkt am Statorelement 200 befestigt. Das elastomere Lagermittel 300 umfasst zumindest ein elastomeres Axiallagermittel 304.1 und zumindest ein elastomeres Torsionslagermittel 304.2 und zumindest ein elastomeres Radiallagermittel 304.3. Das elastomere Lagermittel 300 als Entkopplungsring 306.2 bildet eine Pressverbindung P zu seiner eigenen Befestigung am Statorelement 200 aus. Das Elastomerelement 304 ist ein Elastomerring 310. Der Entkopplungsring 306.2 und der Elastomerring 310 sind in Umfangsrichtung U durchgehend. Der Entkopplungsring 306.2 ist nur aus dem Elastomerring 310 gebildet.

Der Entkopplungsring 306.2 bildet eine elastomere Verzahnung 312 mit Zähnen 313 aus, welche formschlüssig in eine entsprechend Gegenkontur 104 des Gehäuses 100 greift. Die Zähne 313 sind in Radialrichtung R gesehen trapezförmig und die Gegenkontur 104 ist in Radialrichtung R gesehen ebenfalls trapezförmig. Die Gegenkontur 104 ist vom Gehäuse 100 ausgebildet. Die Verzahnung 312 bzw. deren Zähne 313 liegen in Umfangsrichtung U und in Axialrichtung A und in Radialrichtung R an. Jeder Zahn 313 hat einen Zahnkopf 330 mit einer Kopffläche 336 und zwei Zahnflanken 332. Die Trapezform der Zähne 313 und der Gegenkontur 104 verjüngen sich in Richtung Quermittelebene Q. Die Zahnflanken 332 liegen an der Gegenkontur 104 an. Die Zähne 313 umfassen jeweils einen Zahnkern 334, der vom Statorelement 200 gebildet ist. Der Zahnkern 334 ist gebildet dadurch, dass sich das Statorelement 200 mit einer Ausformung in den Elastomerring 310 hinein erstreckt.

Beim Entkopplungsring 306.2 ist das Axiallagermittel 304.1 gebildet von einer elastomeren Kontaktstirnfläche 320 des Elastomerrings 310. Die Kontaktstirnfläche 320 liegt am Gehäuse 100 anliegen, beispielsweise an der Gegenkontur 104. Die Kontaktstirnfläche 320 dient der Axialsteifigkeit. Die Kontaktstirnfläche 320 ist mit der Kopffläche 336 identisch. Beim Entkopplungsring 306.2 ist das Torsionslagermittel 304.2 gebildet von elastomeren Kontaktradialflächen 322 des Elastomerrings 310. Die Kontaktradialflächen 322 liegen in Umfangsrichtung U am Gehäuse 100 an, beispielsweise an der Gegenkontur 104. Die Kontaktradialflächen 322 sind von den Zahnflanken 332 gebildet. Beim Entkopplungsring 306.2 ist das Radiallagermittel 304.3 gebildet von einer elastomeren Kontaktumfangsfläche 324 des Elastomerrings 310. Die Kontaktumfangsfläche 324 liegt am Gehäuse 100 an, beispielsweise an der Gegenkontur 104. Die Kontaktumfangsfläche 324 ist eine Außenumfangsfläche. Beim Entkopplungsring 306.2 formt der Elastomerring 310 in Umfangsrichtung U benachbarte Anlagepolster 326 aus. Die Anlagepolster 326 entsprechen den Radiallagermitteln 304.3.

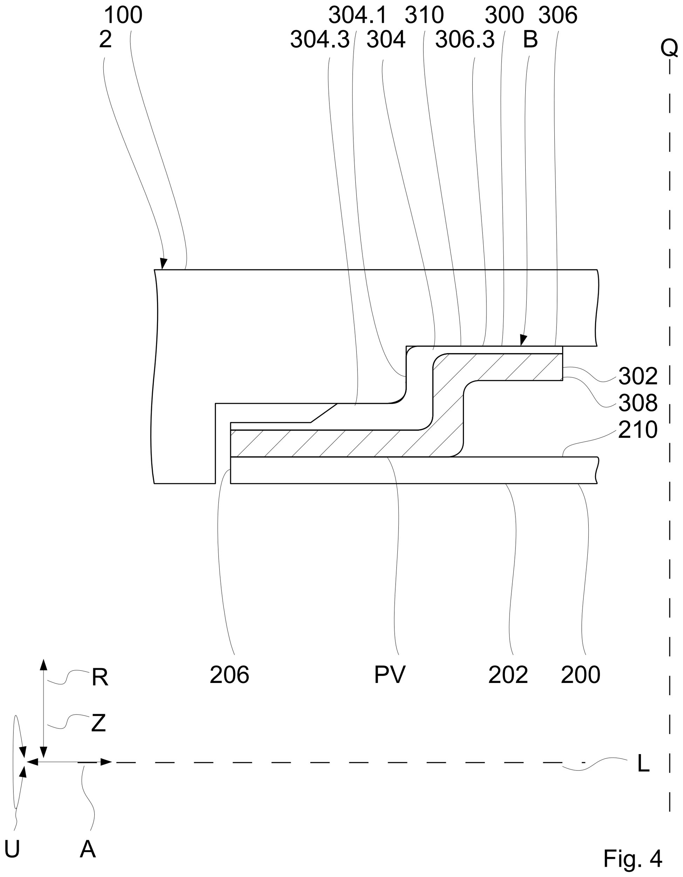

**Figur 4** zeigt in einem Längsschnitt eine Detailansicht einer Elektromotorrotoranordnung 2. Nachstehend wird das elastomere Lagermittel 300 als Entkopplungsring 306.3 beschrieben. Der Entkopplungsring 306.3 umfasst ein einstückiges Elastomerelement 304. Es liegt in Radialrichtung R und Axialrichtung A am Gehäuse 100 an. Das elastomere Lagermittel 300 umfasst ferner ein separates Trägerelement 302. Das einzige Trägerelement 302 trägt das einzige Elastomerelement 304. Das elastomere Lagermittel 300 umfasst zumindest ein elastomeres Axiallagermittel 304.1 und zumindest ein elastomeres Radiallagermittel 304.3. Das elastomere Lagermittel 300 als Entkopplungsring 306.3 bildet eine Pressverbindung P zu seiner eigenen Befestigung am Statorelement 200 aus. Das elastomere Lagermittel 300 als Entkopplungsring 306.3 umfasst einen Trägerring 308 und einen Elastomerring 310. Der Trägerring 308 ist das Trägerelement 302. Der Elastomerring 310 ist das Elastomerelement 304. Der Entkopplungsring 306.3 und der Trägerring 308 und der Elastomerring 310 sind in Umfangsrichtung U durchgehend. Der Trägerring 308 ist ein separates Teil zum Gehäuse 100 und Statorelement 200. Der Trägerring 308 weist längsschnittlich ein Z-Profil auf, wobei die Schenkel des Profils rechte Winkel einschließen. Der Elastomerring 310 ist an zumindest einem Schenkel angeordnet. Beim Entkopplungsring 306.3 liegen das Axiallagermittel 304.1 und das Radiallagermittel 304.3 am Gehäuse 100 an.

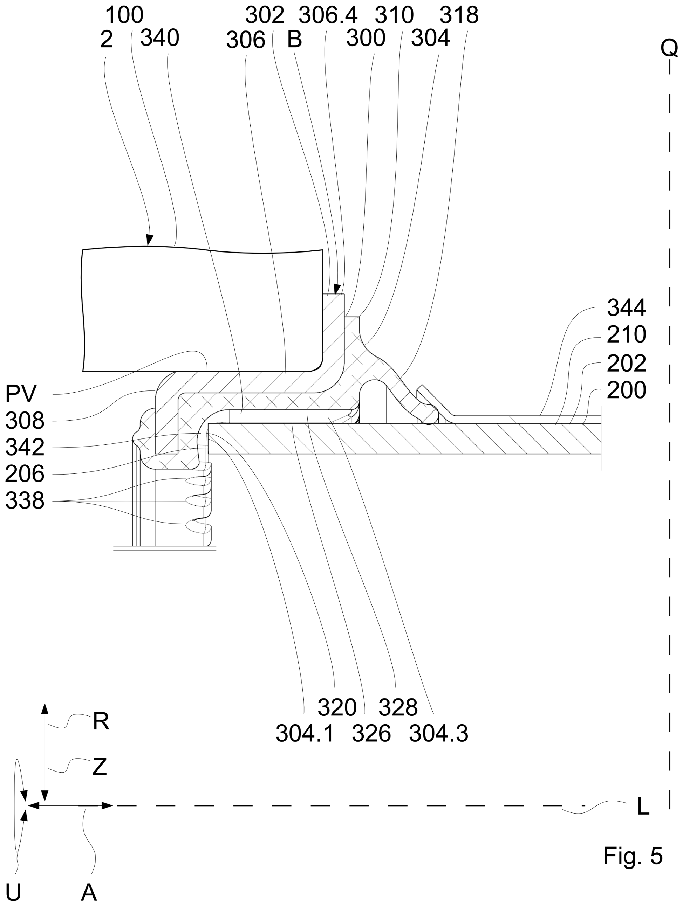

**Figur 5** zeigt in einer Längsschnittansicht ein Detail einer Elektromotorrotoranordnung 2. Nachstehend wird das elastomere Lagermittel 300 als Entkopplungsring 306.4 beschrieben. Es umfasst ein einstückiges Elastomerelement 304. Es liegt in Axialrichtung A und/oder in Radialrichtung (R) am Statorelement 200 an. Das elastomere Lagermittel 300 umfasst ferner ein separates Trägerelement 302. Das einzige Trägerelement 302 trägt das einzige Elastomerelement 304. Das elastomere Lagermittel 300 umfasst zumindest ein elastomeres Axiallagermittel 304.1 und zumindest ein elastomeres Radiallagermittel 304.3. Das elastomere Lagermittel 300 als Entkopplungsring 306.4 bildet eine Pressverbindung P zu seiner eigenen Befestigung am Gehäuse 100 aus. Der Entkopplungsring 306.4 umfasst einen Trägerring 308 und einen Elastomerring 310. Der Trägerring 308 ist das Trägerelement 302. Der Elastomerring 310 ist das Elastomerelement 304. Der Elastomerring 310 ist das Elastomerelement 304. Der Entkopplungsring 306.4 und der Trägerring 308 und der Elastomerring 310 sind in Umfangsrichtung U durchgehend. Der Trägerring 308 weist längsschnittlich ein Z-Profil auf, wobei die Schenkel des Profils rechte Winkel einschließen. Der Elastomerring 310 ist an zumindest einem Schenkel angeordnet. Beim Entkopplungsring 306.4 liegen das Axiallagermittel 304.1 und das Radiallagermittel 304.3 am Statorelement 200 an.

Beim Entkopplungsring 306.4 ist das Axiallagermittel 304.1 gebildet von einer elastomeren Kontaktstirnfläche 320 des Elastomerrings 310. Die Kontaktstirnfläche 320 liegt an der Statorträgerstirnfläche 206 an. Die elastomere Kontaktstirnfläche 320 bildet Kontaktstirnflächenausnehmungen 338 aus, vorliegend bogenförmig ausgestaltet. Die Kontaktstirnflächenausnehmungen 338 sind axial freiraumbeabstandet zur Anlagefläche vom Statorelement 200, vorliegend zur Statorträgerstirnfläche 206. Das Radiallagermittel 304.3 ist von der elastomeren Kontaktumfangsfläche 324 des Elastomerrings 310 gebildet, vorliegend dessen Innenumfangsfläche.

Der Elastomerring 310 des Entkopplungsrings 306.4 formt in Umfangsrichtung U abwechselnd Anlagepolster 326 und Durchgangsabschnitte 328 aus. Die Anlagepolster 326 bilden die Axiallagermittel 304.1 und die Radiallagermittel 304.3 aus. Die Anlagepolster 326 liegen am Statorelement 200 an. Vorliegend liegt das die Axiallagermittel 304.1 an der Statorträgerstirnfläche 206 an und das Radiallagermittel 304.3 an der Umfangsfläche vom Statorelement 200 an. Jedes Anlagepolster 326 ist aus einem Axiallagermittel 304.1 und einem Radiallagermittel 304.3 gebildet.

Die Durchgangsabschnitte 328 bilden zum Statorelement 200 einen Freiraumabstand aus, vorliegend mit der äußeren Umfangsfläche und Statorträgerstirnfläche 206. Die Durchgangsabschnitte 328 sind Axialdurchgänge und Radialdurchgänge. Jeder Durchgangsabschnitt 328 ist gebildet aus einem Axialdurchgang 340 und einem Radialdurchgang 342. Die Durchgangsabschnitte 328 sind begrenzt vom Elastomerkörper 310 und Statorelement 200.

Der Entkopplungsring 306.4 bildet die Ringdichtung 318 einstückig mit dem Elastomerring 310 aus. Die Ringdichtung 318 erstreckt sich in Richtung Quermittelebene Q. Die Ringdichtung 318 ist in Radialrichtung R von einer Hülse 344 gequetscht.

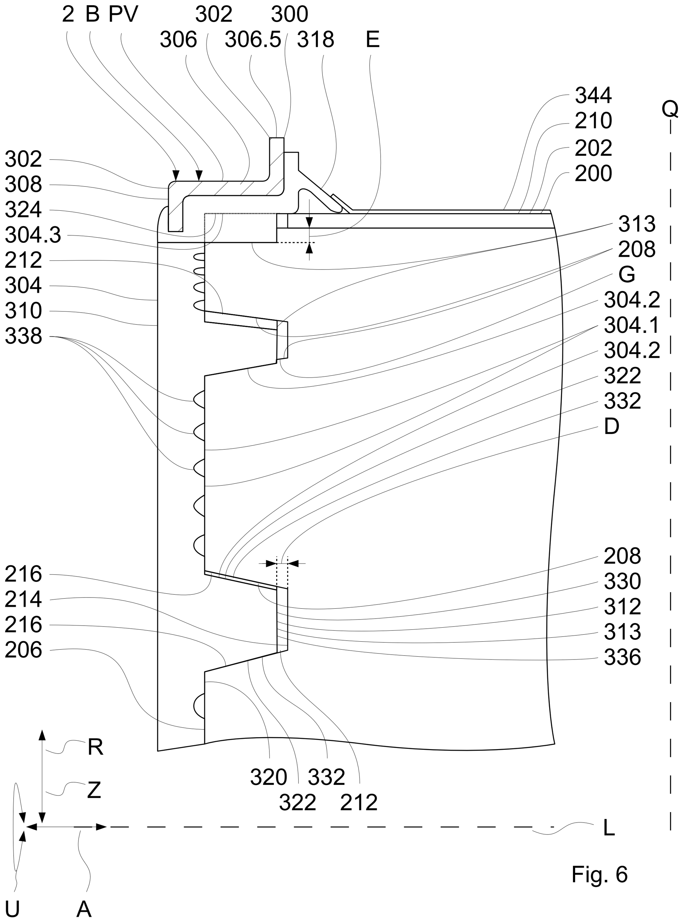

**Figur 6** zeigt in einer Längsschnittansicht ein Detail einer Elektromotorrotoranordnung 2. Nachstehend wird das elastomere Lagermittel 300 als Elastomerring 306.5 beschrieben. Es ähnelt dem Elastomerring 306.2, allerdings liegen die Zähne 313 nunmehr nicht elastomer am Gehäuse 100 an, sondern am Statorelement 200. Der Elastomerring 306.5 umfasst ein einstückiges Elastomerelement 304. Es liegt in Umfangsrichtung U und in Axialrichtung A und in Radialrichtung R am Statorelement 200 an. Das elastomere Lagermittel 300 umfasst zudem ein separates Trägerelement 302. Das einzige Trägerelement 302 trägt das einzige Elastomerelement 304. Das elastomere Lagermittel 300 umfasst zumindest ein elastomeres Axiallagermittel 304.1 und zumindest ein elastomeres Torsionslagermittel 304.2 und zumindest ein elastomeres Radiallagermittel 304.3 (aus illustratorischen Gründen strichliniert dargestellt, weil vom Zahn verdeckt). Das elastomere Lagermittel 300 als Elastomerring 306.2 bildet eine Pressverbindung P zu seiner eigenen Befestigung am Gehäuse 100 (nicht dargestellt) aus.

Der Entkopplungsring 306.5 bildet die Ringdichtung 318 einstückig mit dem Elastomerring 310 aus. Die Ringdichtung 318 erstreckt sich in Richtung Quermittelebene Q. Die Ringdichtung 318 ist in Radialrichtung R von einer Hülse 344 gequetscht.

Der Entkopplungsring 306.5 umfasst einen Trägerring 308 und einen Elastomerring 310. Der Trägerring 308 ist das Trägerelement 302. Der Elastomerring 310 ist das Elastomerelement 304. Der Elastomerring 310 ist das Elastomerelement 304. Der Entkopplungsring 306.5 und der Trägerring 308 und der Elastomerring 310 sind in Umfangsrichtung U durchgehend. Der Trägerring 308 weist längsschnittlich ein Z-Profil auf, wobei die Schenkel des Profils rechte Winkel einschließen. Der Elastomerring 310 ist an zumindest einem Schenkel angeordnet. Beim Entkopplungsring 306.5 liegen das Axiallagermittel 304.1, das Torsionslagermittel 304.2 und das Radiallagermittel 304.3 am Statorelement 200 an.

Der Entkopplungsring 306.5 bildet eine elastomere Verzahnung 312 mit Zähnen 313 aus, welche formschlüssig in eine entsprechend Gegenkontur 212 greift. Die Zähne 313 sind in Radialrichtung R gesehen trapezförmig und die Gegenkontur 212 in Radialrichtung R gesehen ebenfalls. Die Gegenkontur 212 ist vom Statorelement 200 ausgebildet, vorliegend durch stirnseitliche Ausnehmungen. Die Gegenkontur 212 umfasst eine Axialfläche 214 und zwei Radialflächen 216 umfassen. Die Verzahnung 312 und deren Zähne 313 liegen in Umfangsrichtung U an der Gegenkontur 212 an. Jeder Zahn 313 hat einen Zahnkopf 330 und zwei Zahnflanken 332.

Die Zähne 313 haben jeweils eine freie Kopffläche 336 am einem Zahnkopf 330. Die Kopffläche 336 begrenzt eine Lücke G. Die Kopffläche 336 ist axial freiraumbeabstandet zur Gegenkontur 212 bzw. zur Axialfläche 214 - es ist eine Axialdistanz D gebildet. Die Trapezform der Zähne 313 und der Gegenkontur verjüngt sich in Richtung Quermittelebene Q. Die Zahnflanken 332 liegen an der Gegenkontur 212 bzw. den Radialflächen 216 an. Die Zähne 313 stehen jeweils in Radialrichtung R in das Innere des Statorelements 200 ein, vorzugsweise um eine Einstandsstrecke E zwischen 1 mm bis 10 mm.

Beim Entkopplungsring 306.5 ist das Axiallagermittel 304.1 gebildet von einer elastomeren Kontaktstirnfläche 320 des Elastomerrings 310. Die Kontaktstirnfläche 320 liegt an der Statorträgerstirnfläche 206 an. Die elastomere Kontaktstirnfläche 320 bildet Kontaktstirnflächenausnehmungen 338 aus, die vorliegend bogenförmig ausgestaltet sind. Die Kontaktstirnflächenausnehmungen 338 sind axial freiraumbeabstandet zur Anlagefläche vom Statorelement 200, vorliegend zur Statorträgerstirnfläche 206. Die Torsionslagermittel 304.2 sind gebildet von elastomeren Kontaktradialflächen 322 des Elastomerrings 310. Die Kontaktradialflächen 322 liegen in Umfangsrichtung U am Statorelement 200 an und sind von den Zahnflanken 332 gebildet. Das Radiallagermittel 304.3 ist von der elastomeren Kontaktumfangsfläche 324 des Elastomerrings 310 gebildet, vorliegend von dessen Innenumfangsfläche.

Der Entkopplungsring 306.5 bildet die Ringdichtung 318 einstückig mit dem Elastomerring 310 aus. Die Ringdichtung 318 erstreckt sich in Richtung Quermittelebene Q. Die Ringdichtung 318 ist in Radialrichtung R von der Hülse 344 gequetscht.

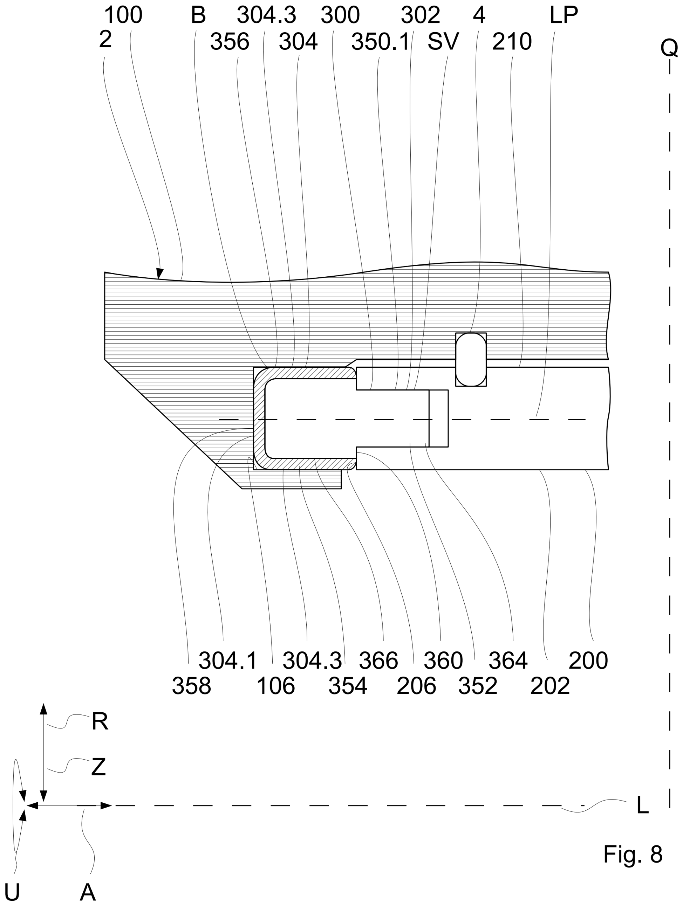

**Figur 7** zeigt in einer Perspektivansicht eine Elektromotorrotoranordnung 2, die in **Figur 8** detailliert dargestellt ist. In Figur 7 ist das Gehäuse 100 ausgeblendet. Beide Figuren 7 und 8 werden gemeinsam beschrieben. Die Elektromotorrotoranordnung 2 umfasst eine Zentrallängsachse L, welche die Elektromotorrotoranordnung 2 durchsetzt. Das Gehäuse 100 ist als Motorgehäuse abgebildet. Das Statorelement 200 ist als hülsenartiger Statorträger 202 abgebildet, der einen innenumfangsseitig angeordneten Stator 204 trägt. Das Statorelement 200 hat axial beidends jeweils eine Statorträgerstirnfläche 206 und weist eine Statorträgerumfangsfläche 210 auf, die eine Außenumfangsfläche ist. Via einer Befestigung B ist das Statorelement 200 am Gehäuse 100 vollständig elastomer gelagert. Vorliegend umfasst die Befestigung B mehrere elastomere Lagermittel 300, jeweils als Entkopplungspin 350.1 ausgebildet.

Nachstehend wird exemplarisch eines der elastomeren Lagermittel 300 als Entkopplungspin 350.1 beschrieben. Es umfasst ein einstückiges Elastomerelement 304. Das elastomere Lagermittel 300 liegt in Umfangsrichtung U und in Axialrichtung A und in Radialrichtung R am Gehäuse 100 an. Das elastomere Lagermittel 300 umfasst ferner ein separates Trägerelement 302. Das einzige Trägerelement 302 trägt das einzige Elastomerelement 304. Das elastomere Lagermittel 300 umfasst zumindest ein elastomeres Axiallagermittel 304.1 und zumindest ein elastomeres Torsionslagermittel 304.2 und zumindest ein elastomeres Radiallagermittel 304.3.

Das elastomere Lagermittel 300 als Entkopplungspin 350.1 bildet als beispielhafte Verbindung eine Schraubverbindung SV zu seiner eigenen Befestigung am Statorelement 200 aus.

Die Elektromotorrotoranordnung 2 umfasst axial beidends jeweils eine Ringdichtung 4, die in Umfangsrichtung U durchgehend an der Statorträgerumfangsfläche 210 angeordnet ist. Jede Ringdichtung 4 dichtet zwischen Gehäuse 100 und Statorelement 200 ab. Die Ringdichtung 4 ist in Radialrichtung R druckbeaufschlagt bzw. gequetscht. Die Ringdichtung 4 ist ein separates Teil zum Elastomerelement 304.

Das elastomere Lagermittel als Entkopplungspin 350.1 umfasst einen Trägerpin 352 und eine Elastomerkappe 354. Der Trägerpin 352 ist das Trägerelement 302 und die Elastomerkappe 354 ist das Elastomerelement 304. Der Trägerpin 352 ist ein separates Teil zum Gehäuse 100 und zum Statorelement 200. Jeder Entkopplungspin 350.1 weist eine Pinlängsachse LP auf. Sie erstreckt sich in Längsrichtung durch den Entkopplungspin 350.1 hindurch. Die Pinlängsachse LP verläuft vorliegend parallel zur Zentrallängsachse L.

Der Trägerpin 352 trägt die Elastomerkappe 354. Die Elastomerkappe 354 kann am Trägerpin 352 stoffschlüssig befestigt sein (anvulkanisiert oder mittels Haftvermittler) oder darauf aufgepresst sein. Der Trägerpin 352 hinterbaut die Elastomerkappe 354 und ist einstückig. Der Trägerpin 352 bildet einen Befestigungsbereich 364 und einen Trägerbereich 366 ausbildet. Der Befestigungsbereich 364 befestigt den Trägerpin 352 am Statorelement 200. Der Befestigungsbereich bildet vorliegend ein Gewinde aus. Der Trägerbereich 366 trägt die Elastomerkappe 354. Der Trägerbereich 366 bildet einen Befestigungsanschlag 360 aus. Der Trägerbereich 366 weist einen größeren Durchmesser auf als der Befestigungsbereich 364.

Die Elastomerkappe 354 bildet einen Zylinderabschnitt 356 und einen Stirnseitenabschnitt 358 aus. Die Elastomerkappe 354 greift ferner formschlüssig und in Axialrichtung A in eine entsprechend Gegenkontur 106 des Gehäuses 100 ein. Der Zylinderabschnitt 356 ist ein Hohlzylinderabschnitt und ist vom Trägerbereich 366 hinterbaut. Der Zylinderabschnitt 356 ist in Umfangsrichtung U (bezogen auf die Pinlängsachse LP) durchgehend. Die Elastomerkappe 354 liegt umfangsseitig vollständig an der Gegenkontur 106 an. Der Stirnseitenabschnitt 358 ist scheibenförmig und vom Trägerbereich 366 hinterbaut ist. Elastomerkappe 354 liegt axial an der Gegenkontur 106 an. Der Entkopplungspin 350.1, der Trägerpin 352, der Trägerbereich 366 und die Elastomerkappe 354 sind bezüglich der eigenen Pinlängsachse LP Rotationskörper. Die Gegenkontur 106 ist bezüglich der entsprechenden Pinlängsachse LP ein Rotationskörper.

Ersichtlich sind mehrere Entkopplungspins 350.1 an jeweils einer Stirnseite des Statorelements 200 befestigt. Die Entkopplungspins 350.1 zu einer Axialseite des Statorelements 200 bilden eine Pinanordnung 362. Die Entkopplungspins 350.1 in ihrer Pinanordnung 362 können auf einem imaginären Kreis liegen oder in Umfangsrichtung U ungleichmäßige Radialabstände zur Zentrallängsachse L aufweisen.

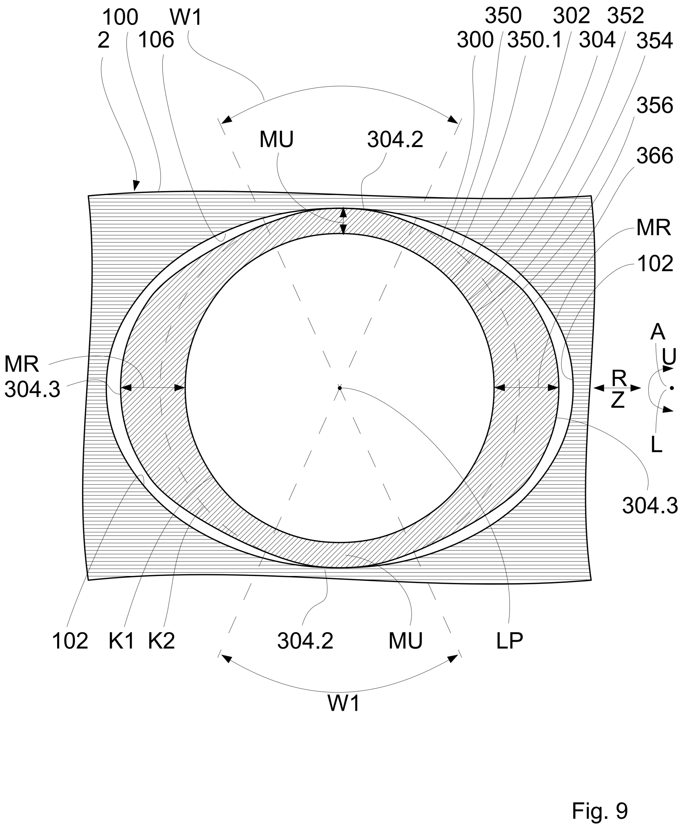

Zur Vermeidung von Wiederholungen werden nachstehend bezüglich Figur 9 lediglich die Unterschiede zu den Figuren 7 und 8 beschrieben. **Figur 9** zeigt das elastomere Lagermittel 300 als Entkopplungspin 350.2 im Querschnitt. Das Elastomerelement 304 liegt in Umfangsrichtung U und in Axialrichtung A, jedoch nicht in Radialrichtung R am Gehäuse 100 an. Die Elastomerkappe 354 liegt daher nur teilweise an der Gegenkontur 106 an.

Die Elastomerkappe 354 des Entkopplungspin 350.2 unterscheidet sich im Wesentlichen durch ihren abweichenden Querschnitt.

Die Elastomerkappe 354 weist bezüglich der eigenen Pinlängsachse LP eine Rotationssymmetrie mit der Zähligkeit von 2 (n=2) auf. Die Elastomerkappe 354 weist zwei Bereiche erster Materialstärke auf, hier als Materialstärke in Radialrichtung MR bezeichnet, die sich bezüglich der Pinlängsachse LP diametral gegenüberliegen, und zwei weitere Bereiche zweiter Materialstärke auf, hier als Materialstärke in Umfangsrichtung MU bezeichnet, die sich bezüglich der Pinlängsachse LP diametral gegenüberliegen. Die erste Materialstärke ist größer als die zweite Materialstärke. Dadurch ist das Elastomerpolster des Entkopplungspins 350.2 in einer Raumrichtung dicker als in einer anderen Raumrichtung.

Die Elastomerkappe 354 kann querschnittlich oval sein und/oder in einem ersten Winkelfenstern W1, die in Umfangsrichtung U liegen, eine gleichbleibende Materialstärke haben. Die Winkelfenster W1 haben vorliegend die entsprechende Pinlängsachse LP als Zentrum.

Die Außenumfangsfläche des Trägerpins 352 und der dessen Trägerbereich 366 liegen auf einem gedachten ersten Kreis K1. Die Außenumfangsfläche der Elastomerkappe 354 liegt insgesamt betrachtet abschnittsweise aber innerhalb der ersten Winkelfenster W1 vollständig auf einem gedachten zweiten Kreis K2. Die beiden gedachten Kreise K1, L2 sind konzentrische Kreise. Dadurch ist eine gleichbleibende Materialstärke der Elastomerkappe 354 in diesem Bereich erzeugt. Die ersten Winkelfenster W1 liegen in Umfangsrichtung U und sich diametral bezüglich der Pinlängsachse LP gegenüber.

Die Gegenkontur 106 ist bezüglich der entsprechenden Pinlängsachse LP rotationssymmetrisch mit der Zähligkeit von 2 (n=2). Die Rotationssymmetrie der Gegenkontur 106 ist so eingestellt, dass sich in unterschiedliche Raumrichtungen unterschiedliche Steifigkeiten ergeben. Die Gegenkontur 106 ist querschnittlich oval. Die lange Quererstreckung der ovale Gegenkontur 106 erstreckt sich in Radialrichtung R und die kurze Quererstreckung verläuft in Umfangsrichtung U, bezogen auf die Zentrallängsachse L.

Die Gegenkontur 106 begrenzt mit der Elastomerkappe 354 zwei Ausweichräume 102. Darin kann Elastomer der Elastomerkappe 354 bei Lasteinwirkung verdrängt werden. Die zwei Ausweichräume 102 liegen sich entlang der Radialrichtung R diametral bezüglich der Pinlängsachse LP gegenüber, wodurch Ausweichräume 102 in Zentrifugalrichtung Z geschaffen sind. Die Elastomerkappe 354 liegt somit in Umfangsrichtung U an zwei diametral bezüglich der Pinlängsachse LP verorteten Bereichen an und begrenzt in Radialrichtung R zwei Ausweichräume 102. Die Elastomerkappe 354 ist daher bereichsweise an der Gegenkontur 106 anliegend und bereichsweise freiraumbeabstandet dazu.

Die **Figuren 7 bis 9** zeigen ein elastisches Lagermittel 300 als Entkopplungspin 350 in diversen beispielhaften Ausgestaltungen. Die dort gezeigte Befestigung B kann neben dem mindestens einen Entkopplungspin 350.1, 350.2 auch mindestens einen Entkopplungsring 306.1, 306.2, 306.3, 306.4, 306.5 umfassen, der in den Figuren 2 bis 6 in diversen beispielhaften Ausgestaltungen gezeigt und allgemeiner in der Erfindungsbeschreibung beschrieben ist.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein. In den Rahmen der Erfindung fallen sämtliche Kombinationen aus zumindest zwei von den in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

**Bezugszeichenliste**

| | | | |
|---|---|---|---|
| 2 | Elektromotoranordnung | 350 | Entkopplungspin |
| 4 | Ringdichtung | 350.1 | Entkopplungspin |
| | | 350.2 | Entkopplungspin |
| 100 | Gehäuse | 352 | Trägerpin |
| 102 | Ausweichraum | 354 | Elastomerkappe |
| 104 | Gegenkontur | 356 | Zylinderabschnitt |
| 106 | Gegenkontur | 358 | Stirnseitenabschnitt |
| | | 360 | Befestigungsanschlag |
| 200 | Statorelement | 362 | Pinanordnung |
| 202 | Statorträger | 364 | Befestigungsbereich |
| 204 | Stator | 366 | Trägerbereich |
| 206 | Statorträgerstirnfläche | | |
| 208 | Kontaktradialgegenfläche | A | Axialrichtung |
| 210 | Statorträgerumfangsfläche | B | Befestigung |
| 212 | Gegenkontur | D | Axialdistanz |
| 214 | Axialfläche | E | Einstandsstrecke |
| 216 | Radialfläche | G | Lücke |
| | | K1 | erster Kreis |
| 300 | Lagermittel | K2 | zweiter Kreis |
| 302 | Trägerelement | L | Zentrallängsachse |
| 304 | Elastomerelement | LG | Gesamtlänge |
| 304.1 | Axiallagermittel | LP | Pinlängsachse |
| 304.2 | Torsionslagermittel | LS | Stirnseitenbereichslänge |
| 304.3 | Radiallagermittel | MU | Materialstärke |
| | | MR | Materialstärke |
| 306 | Entkopplungsring | PV | Pressverbindung |
| 306.1 | Entkopplungsring | Q | Quermittelebene |
| 306.2 | Entkopplungsring | R | Radialrichtung |
| 306.3 | Entkopplungsring | ST | Stoffschlussverbindung |
| 306.4 | Entkopplungsring | SV | Schraubverbindung |
| 306.5 | Entkopplungsring | U | Umfangsrichtung |
| 308 | Trägerring | W1 | Winkelfenster |
| 310 | Elastomerring | Z | Zentrifugalrichtung |
| 312 | Verzahnung | | |
| 313 | Zahn | | |
| 318 | Ringdichtung | | |
| 320 | Kontaktstirnfläche | | |
| 322 | Kontaktradialfläche | | |
| 324 | Kontaktumfangsfläche | | |
| 326 | Anlagepolster | | |
| 328 | Durchgangsabschnitt | | |
| 330 | Zahnkopf | | |
| 332 | Zahnflanke | | |
| 334 | Zahnkern | | |
| 336 | Kopffläche | | |
| 338 | Kontaktstirnflächenausnehmung | | |
| 340 | Axialdurchgang | | |
| 342 | Radialdurchgang | | |
| 344 | Hülse | | |

## Patentansprüche

1. Elektromotoranordnung (2), umfassend
- eine Zentrallängsachse (L), welche die Elektromotorrotoranordnung (2) durchsetzt,
- ein Gehäuse (100),
- ein Statorelement (200), welches am Gehäuse (100) vermittels einer Befestigung (B) befestigt ist,
- wobei die Befestigung (B) zumindest ein elastomeres Lagermittel (300) zur elastomeren Entkopplung umfasst.

2. Elektromotoranordnung (2) nach Anspruch 1
**dadurch gekennzeichnet, dass**
das elastomere Lagermittel (300) ein Elastomerelement (304) umfasst, vorzugsweise liegt das Elastomerelement (304) in Umfangsrichtung (U) und/oder in Axialrichtung (A) und/oder in Radialrichtung (R) an, vorzugsweise umfasst das elastomere Lagermittel (300) ferner ein Trägerelement (302).

3. Elektromotoranordnung (2) nach einem der voranstehenden Ansprüche
**dadurch gekennzeichnet, dass**
das elastomere Lagermittel (300) eine Pressverbindung (PV) oder Stoffschlussverbindung (ST) oder Schraubverbindung (SV) zu seiner eigenen Befestigung ausbildet.

4. Elektromotoranordnung (2) nach einem der voranstehenden Ansprüche
**gekennzeichnet durch eine**
elastomere Ringdichtung (318), vorzugsweise ist die Ringdichtung (318) in Umfangsrichtung (U) durchgehend.

5. Elektromotoranordnung (2) nach einem der voranstehenden Ansprüche
**dadurch gekennzeichnet, dass**
das elastomere Lagermittel (300) ein Entkopplungsring (306) ist, vorzugsweise umfassend einen Trägerring (308) und einen Elastomerring (310).

6. Elektromotoranordnung (2) nach Anspruch 5
**dadurch gekennzeichnet, dass**
der Entkopplungsring (306) eine elastomere Verzahnung (312) mit Zähnen (313) ausbildet, welche formschlüssig in eine entsprechend Gegenkontur (104) greift, vorzugsweise sind die Zähne (313) in Radialrichtung (R) gesehen trapezförmig und/oder die Gegenkontur (104) in Radialrichtung (R) gesehen trapezförmig.

7. Elektromotoranordnung (2) nach einem der Ansprüche 1 bis 4
**dadurch gekennzeichnet, dass**
das elastomere Lagermittel (300) ein Entkopplungspin (350) ist, vorzugsweise umfassend einem Trägerpin (352) und eine Elastomerkappe (354).

8. Elektromotoranordnung (2) nach Anspruch 7
**dadurch gekennzeichnet, dass**
die Elastomerkappe (354) einen Zylinderabschnitt (356) und/oder einen Stirnseitenabschnitt (358) ausbildet und in eine entsprechend Gegenkontur (106) greift.

9. Elektromotoranordnung (2) nach einem der Anspruch 7 oder 8
**dadurch gekennzeichnet, dass**
der Entkopplungspin (350) und/oder der Trägerpin (352) und/oder der Trägerbereich und/oder der Befestigungsbereich und/oder die Elastomerkappe (354) bezüglich der eigenen Pinlängsachse (LP) rotationssymmetrisch ist oder ein Rotationskörper ist.

10. Elektromotoranordnung (2) nach einem der Anspruch 7 bis 9,
**dadurch gekennzeichnet, dass**
die Elastomerkappe (354) in Umfangsrichtung (U) anliegt und in Radialrichtung (R) zumindest einen Ausweichraum (102) begrenzt oder andersherum.
